# EUROPEAN PATENT SPECIFICATION

(11) **EP 2 762 703 B1**
(45) Date of publication and mention of the grant of the patent: **03.05.2017**
(21) Application number: 14152185.6
(22) Date of filing: 22.01.2014
(51) Int. Cl.: F02B 67/06, B60K 25/02

(54) **Link arrangement**
Verbindungsanordnung
Agencement de liaison

(30) Priority: 04.02.2013 SE 1350131
(43) Date of publication of application: 06.08.2014
(73) Proprietor: Scania CV AB (publ), 151 87 Södertälje (SE)
(72) Inventor: Kuiphuis, Tom, 7627 PA BORNERBROEK (NL)
(74) Representative: Thum, Bernhard

(56) References cited:
- JP-A- H03 273 926
- US-A- 4 506 522
- US-A- 4 633 828
- US-A- 5 065 713
- US-A- 6 098 950

## Description

### Field of the invention

The present invention relates to a link arrangement according to the preamble of the independent claim.

More specifically the present invention relates to a link arrangement adapted to transmitting movements, e.g. a vibratory movement or intermittent movements, from a combustion engine to an auxiliary system, such as a compressor, e.g. for a vehicle such as a bus, a truck or some other vehicle, or in a vessel.

### Background to the invention

A combustion engine is sometimes adapted to transmitting via an output shaft a rotary motion from the engine's crankshaft to the auxiliary system via a belt which transmits the rotation to a pulley on a shaft of the auxiliary system.
Buses are normally equipped with a compressor for air conditioning, a so-called A/C compressor. The need for a high-capacity A/C compressor is greater in buses than in trucks. A/C compressors suited to buses are therefore considerably larger physically than those fitted in trucks.
In trucks the A/C compressor is usually fitted directly on the engine, whereas the A/C compressor for buses is often fitted separately.
Where the auxiliary system, e.g. an A/C compressor, is fitted separately from the engine, it is often supported by a platform which is fastened to the vehicle via insulators which are for example made of rubber. The compressor is often driven by the crankshaft via a so-called V-belt. As the engine's movements are not transmitted to the platform, the distance between the pulley on the crankshaft and the pulley on the A/C compressor will vary greatly, depending on the respective mutually independent movements of the engine and the compressor. The directions of the shafts relative to one another will therefore also vary. This leads to large variations in the tension of the driving belt and sometimes to different directions of the rotational axes of the pulleys.
The belt will for example flutter and slip because of the movements of the pulleys relative to one another, leading to belt wear and consequently shorter service life.

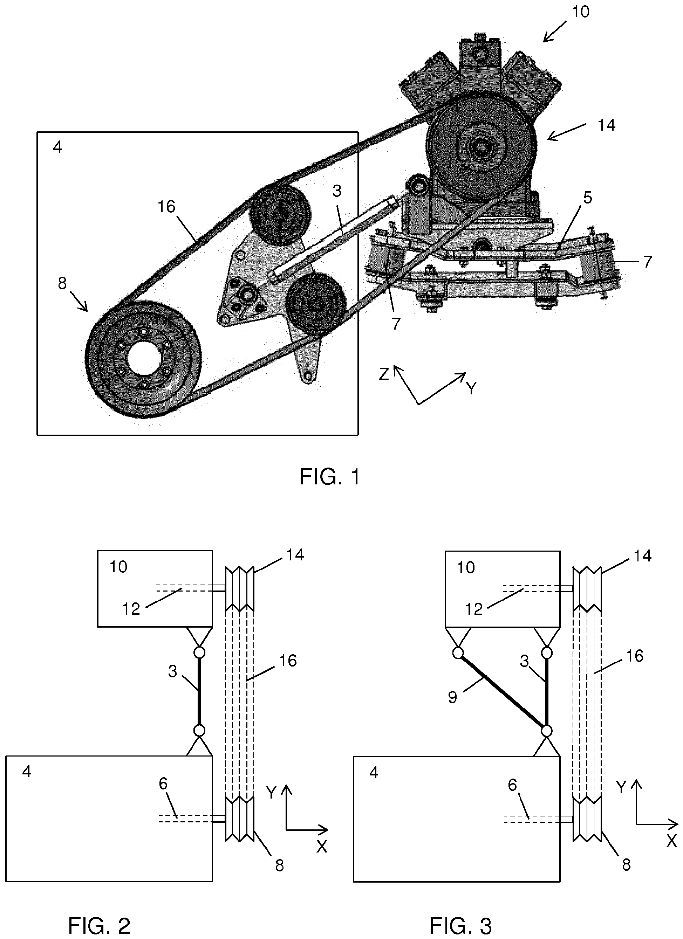

Figure 1 is a schematic diagram of an engine 4 with a pulley 8 which via a driving belt 16 is adapted to driving an auxiliary system 10, e.g. a compressor. The belt transmits the rotation of the pulley 8 to a pulley 14 on the auxiliary system. The auxiliary system is mounted on a platform 5 which is supported by a number of insulators 7.
To improve the stability, a rod 3 may be provided which is aligned parallel with a line which connects the rotational centres of the two pulleys in order to transmit part of the movement from the engine to the platform and thereby reduce the relative movement between these two fixed elements (the engine and the compressor/platform).
The rod is depicted in the schematic diagram in Figure 2. It reduces the variation in the belt tension but does not solve the problem of the variation in the mutual alignment of the rotational axes of the pulleys.
The rod is also used as a tensioning device to provide the belt with correct "pretensioning".

As the rod is at a distance in direction X from the belt, a moment is created. This in combination with the free movement in all directions which the platform itself exhibits (the free movement depends on the configuration of the suspension, i.e. the insulators) means that the A/C compressor will sway and rock.

Movements of the compressor in direction Y (see Figure 2), which is the direction of the rod, will be prevented by fitting the rod. Movements in directions X and Z will not be prevented by the rod. Direction Z is perpendicular to both direction X and direction Y. The rod will also not prevent rotations about the X, Y and Z axes. Rotation in direction X may cause variation in the belt tension but will not affect the alignments of the pulley shafts. It does however cause rotations about both the Y and the Z axes, which rotations greatly reduce the service life of the belt. We cite below a number of patent specifications referring to different designs whereby a compressor is driven by a driving belt connected to the crankshaft of a combustion engine.

EP2503182 describes an arrangement according to the preamble of claim 1.

US-4540387 refers to a device for tensioning of driving belts and comprises supporting arms for the pulleys, and rods for adjusting the distance between the arms. Special flexible guide bars keep the supporting arms constantly parallel. US-6360712 refers to an arrangement for aligning and fixing a compressor to an engine. It further describes two upper arms which are also used to fix the compressor to the engine.
JP2009209998 refers to a system whereby a compressor is fitted close to a propulsive machine with use of a frame.
JP2007051666 refers to a system comprising means for aligning pulleys with one another.
US-2007/259745 refers to a system for a belt drive mechanism intended to tension the driving belt.
To increase the service life of the driving belt, it is necessary to prevent harmful movements between the two elements, i.e. between the engine and the auxiliary system, so that they behave like a single element, as for example in configurations where the compressor is fitted directly on the engine. In such configurations the platform (the compressor) might be wholly supported by the engine. The load (weight) upon the engine block is often such that this is not possible, in which case the platform has to be fitted separately from the engine.

Where the auxiliary system is fitted separately from the engine it is important to prevent all harmful relative movements/rotations between them, particularly those which most adversely affect the belt tension and the alignment.

The object of the present invention is to eliminate or considerably reduce problems which arise both from variations in the alignment of the crankshaft relative to the rotating shaft of an auxiliary system which needs to be driven, and from variations in the tension of the belt. The problems are caused by the fact that the engine and the auxiliary system (e.g. an A/C compressor) can move independently of one another, as well as in direction Y (see for example Figure 1).

### Summary of the invention

The above objects are achieved with the invention defined by the independent claim.

Preferred embodiments are defined by the dependent claims.

The present invention relates to a link arrangement in the context of a belt-driven auxiliary system connected to a combustion engine via a belt which is driven by the engine's crankshaft. In particular, the invention relates to a belt-driven system in the form of an A/C compressor in cases where the belt is a so-called V-belt. According to the invention a link arrangement situated between the engine and the auxiliary system is intended to prevent their moving relative to one another, which would cause the driving belt to become worn and need changing prematurely.

The present invention achieves the following advantages:
- It stops the belt being affected by alignment variations caused by relative movement between the engine and the auxiliary system and thereby lengthens the service life of the belt.
- It reduces the risk of variation in belt tension and thereby leads to longer belt service life.

### Brief description of drawings

Figure 1 depicts an engine and a compressor driven by a driving belt as in prior art.
Figure 2 is a schematic diagram of an engine and an auxiliary system with one stabilising rod as in prior art.
Figure 3 is a schematic diagram of an engine and an auxiliary system with two stabilising rods according to the present invention.
Figure 4 is a schematic diagram illustrating a link arrangement according to an embodiment of the present invention.
Figure 5 is a schematic diagram illustrating a link arrangement according to another embodiment of the present invention.
Figure 6 is a schematic diagram illustrating a further embodiment of the link arrangement according to the invention.
Figure 7 is a schematic diagram illustrating the embodiment in Figure 6.
Figure 8 is a schematic diagram illustrating a link arrangement according to the present invention.

### Detailed description of preferred embodiments of the invention

The detailed description refers to examples illustrated in the attached drawings, in which the same reference notations are used for the same or similar items.

A list is set out below of movements and rotations in different directions and how they affect the alignment and the belt tension.

The various directions are indicated in the drawings by arrows and markings.
1. Movement in direction X. More effect on alignment when the distance between the pulleys decreases. Little effect on belt tension.
2. Movement in direction Y. Large effect on belt tension. No effect on alignment. Is prevented by one rod, as described above.
3. Movement in direction Z. Little effect, particularly when the distance between the pulleys is large. May cause slipping but does not affect alignment.
4. Rotation about X axis. Little effect on belt tension. May cause slipping but does not affect alignment.
5. Rotation about Y axis. Large effect on alignment. No mutually fixing with one rod according to the solution depicted in Figure 2. Little effect on belt tension.
6. Rotation about Z axis. Large effect on alignment. No mutually fixing with one rod according to the solution depicted in Figure 2. Little effect on belt tension.

For significant improvement of service life, the movements/rotations in items 1, 5 and 6 need to be prevented (fixed) in addition to item 2, which is already prevented by the first rod 3 (see Figure 2). This will require a different type of connection between the two elements.

Figure 3 illustrates how improved connection between the engine and the auxiliary system may be achieved by introducing a further rod 9 with an oblique alignment in the plane defined by directions X and Y. The link arrangement depicted in Figure 3 prevents relative movements in direction X and direction Y.

The connection depicted in Figure 3 results in the following:
1. Movement in direction X. Fixed by the second rod 9.
2. Movement in direction Y. Fixed by the first rod 3.
3. Movement in direction Z. Little effect, particularly when the distance between the pulleys is large. May cause slipping but does not affect alignment.
4. Rotation about X axis. Little effect on belt tension. May cause slipping but does not affect alignment.
5. Rotation about Y axis. Large effect on alignment. No mutually fixing with one rod according to the solution depicted. Little effect on belt tension.
6. Rotation about Z axis. Large effect on alignment. No mutually fixing with one rod according to the solution depicted. Little effect on belt tension.

To achieve fixing which affects items 5 and 6, a further link (rod) has to be introduced.

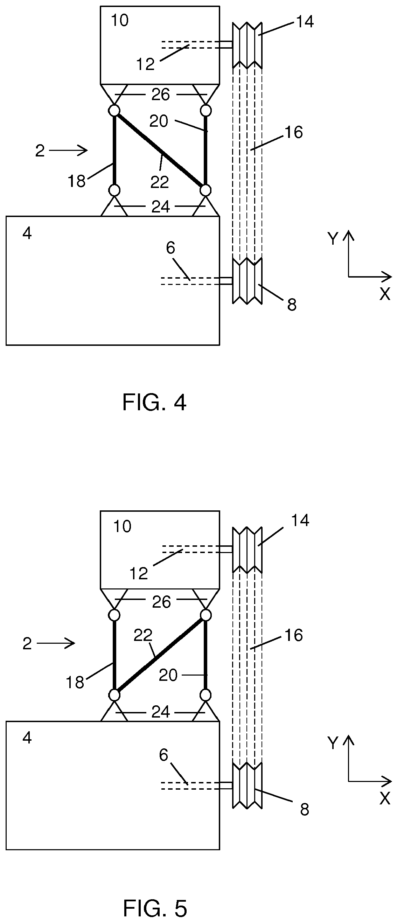

The present invention relates to a link arrangement intended to achieve this fixing which also affects items 5 and 6 above. The invention will now be described in detail inter alia with reference to Figures 4-8.

The link arrangement 2 is intended to be used in the context of an engine 4 with a first shaft 6 provided with a first pulley 8, and an auxiliary system 10 with a second shaft 12 provided with a second pulley 14.

A driving belt 16, preferably a so-called V-belt, is fitted on said first and second pulleys 8, 14 and adapted to transmitting rotary motion from the first shaft 6 to the second shaft 12.

The relative movements which may occur between said first and second shafts 6, 12 exhibit six degrees of freedom which are defined in terms of:
- a direction X (X axis) defined by the longitudinal direction of the first shaft 6;
- a direction Y (Y axis) defined by a line which crosses said first and second shafts at right angles and is perpendicular to direction X;
- a direction Z (Z axis) which is perpendicular to said directions X and Y,
and
- rotations about the respective X, Y and Z axes.

The link arrangement 2 is adapted to being fastened to the engine 4 and to the auxiliary system 10 and to preventing relative movements between said first and second shafts 6, 12 in at least four degrees of freedom, inter alia rotations about the respective Y and Z axes.

In one embodiment the link arrangement 2 is adapted to absorbing forces in an oblique direction in a plane defined by directions X and Y, which oblique direction corresponds to neither of directions X and Y.

Figures 4 and 5 depict two variants of an embodiment of the invention. In this embodiment the link arrangement comprises at least three elongate bar elements 18, 20, 22 each provided with two fastening portions 24, 26 suited to being fastened respectively to the engine 4 and the auxiliary system 10. Two of the bar elements 18, 20 have an alignment corresponding to direction Y, and the third bar element 22 has an oblique alignment corresponding to neither of directions X and Y. All of the bar elements 18, 20, 22 are situated substantially in the plane defined by directions X and Y.

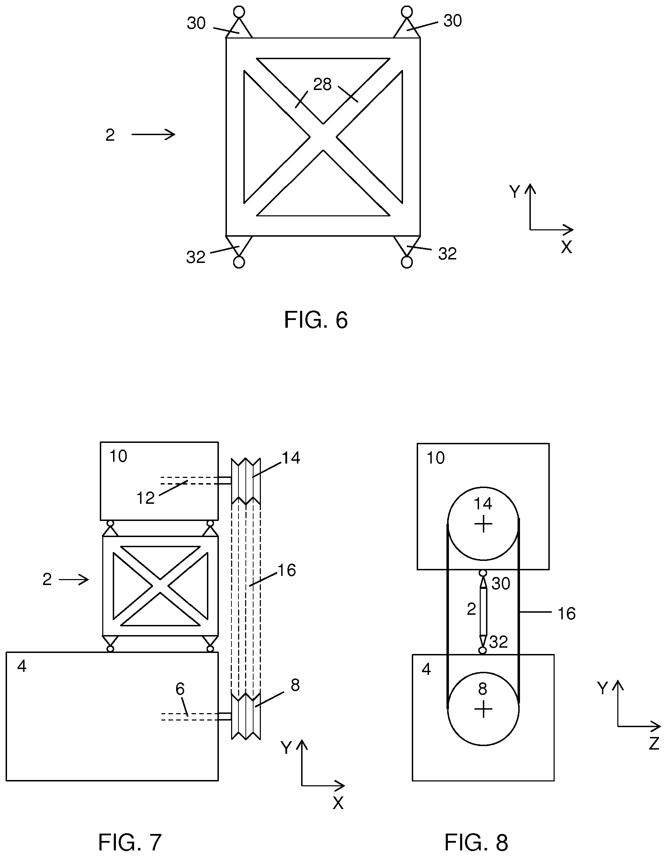

In a further embodiment the link arrangement 2 comprises a latticework 28 illustrated schematically in Figure 6. On two of the sides of the latticework there are at least two fastening portions 30, 32 suited to being fastened respectively to the engine 4 and the auxiliary system 10. The latticework 28 depicted in Figure 6 is to be regarded as an example. It may be configured in many different ways and still absorb oblique forces in the Y-X plane. For example, the diagonal members might be divided and be supported by transverse members. Figure 7 depicts the link arrangement fitted between an engine 4 and an auxiliary system 10. The other reference notations have the same meaning as in the above description of Figures 4 and 5. Figure 8 is a side view of the link arrangement depicted in Figure 7.

A further variant might be to have two bar elements similar to those marked 18 and 20 in Figures 4 and 5 and then provide a transverse bar member connecting the midpoints of the bar elements so that the link arrangement then resembles a letter H.

For both the bar elements and the latticework the fastening portions 18, 20, 22, 30, 32 preferably each comprise a ball-joint via which they are suited to being fastened respectively to the engine 4 and the auxiliary system 10.

Alternatively, the fastening portions may each be provided with a hinge which allows movement in two dimensions, e.g. in the Y-Z plane for the latticework 28 and for the bar elements 18, 20.

In every embodiment it is generally the case that the link arrangement 2 is adapted to transmitting movements from the engine 4 to the auxiliary system 10. The link arrangement is therefore rigid in the directions in which relative movements are to be prevented. This means for example that the bar element is primarily suited to absorbing forces in its longitudinal direction and is then made of suitable material, e.g. a steel alloy, and its size is appropriate to the relevant forces.

The present invention relates also to a vehicle, e.g. a bus or a truck, provided with an engine 4, an auxiliary system 10, preferably a compressor, and a link arrangement 2 as described above.

The link arrangement according to the present invention as exemplified by Figures 4-8 thus achieves the following:
1. Movement in direction X. Fixed by the diagonal bar element 22 or by the latticework 28.
2. Movement in direction Y. Fixed by bar elements 18 and 20.
3. Movement in direction Z. Little effect, particularly when the distance between the pulleys is large. May cause slipping but does not affect alignment.
4. Rotation about X axis. Little effect on belt tension. May cause slipping, but does not affect alignment.
5. Rotation about Y axis. Fixed by bar elements 18, 20, 22 or by the latticework 28.
6. Rotation about Z axis. Fixed by bar elements 18, 20 or by the latticework 28.

## Claims

1. An arrangement, comprising a link arrangement (2), an engine (4) with a first shaft (6) provided with a first pulley (8), and an auxiliary system (10) with a second shaft (12) provided with a second pulley (14), in which arrangement a driving belt (16) is fitted on said first and second pulleys (8, 14) and adapted to transmitting rotary motion from the first shaft (6) to the second shaft (12), and relative movements between said first and second shafts (6, 12) exhibit six degrees of freedom which are defined in terms of a direction X (X axis) defined by the longitudinal direction of the first shaft (6) a direction Y (Y axis) defined by a line which crosses said first and second shafts at right angles and is perpendicular relative to direction X,
a direction Z (Z axis) which is perpendicular relative to said directions X and Y, and rotations about the respective X, Y, and Z axes,
**characterised in that**
the link arrangement (2) comprises a first rod (3, 20) provided with a first fastening point (24) to the engine (4) and a second fastening point (26) to the auxiliary system (10) and aligned in a direction corresponding to said direction Y, and a second rod (9, 22) provided with a first fastening point (24) to the engine (4) and a second fastening point (26) to the auxiliary system and aligned in an oblique direction which corresponds to neither of said directions X and Y, which link arrangement (2) is further adapted to preventing relative movements between said first and second shafts (6, 12) in at least two degrees of freedom, inter alia in direction X and direction Y, the second rod (9, 22) being obliquely aligned in the plane defined by directions X and Y.

2. The arrangement according to claim 1, in which the link arrangement (2) is adapted to absorbing forces in an oblique direction in the plane defined by directions X and Y, which oblique direction corresponds to neither of directions X and Y.

3. The arrangement according to claim 1 or 2, in which the link arrangement (2) is adapted to preventing relative movements between said first and second shafts (6, 12) in at least four degrees of freedom, inter alia rotations about the respective Y and Z axes.

4. The arrangement according to claim 2 or 3, in which the link arrangement comprises at least three elongate bar elements (18, 20, 22) which are each provided with two fastening portions (24, 26) suited to being fastened respectively to the engine (4) and the auxiliary system (10).

5. The arrangement according to claim 4, in which two of said bar elements (18, 20) have an alignment corresponding to said direction Y, the third bar element (22) has an oblique alignment which corresponds to neither of directions X and Y, and all of the bar elements (18, 20, 22) are situated substantially in the plane defined by directions X and Y.

6. The arrangement according to claim 2 or 3, which link arrangement (2) comprises a latticework (28) which has on two of its sides at least two fastening portions (30, 32) suited to being fastened respectively to the engine (4) and the auxiliary system (10).

7. The arrangement according to either of claims 4 and 5, in which each of the fastening portions (18, 20, 22, 30, 32) is provided with a ball-joint via which they are adapted to being fastened respectively to the engine (4) and the auxiliary system (10).

8. The arrangement according to any one of claims 1-7, in which the link arrangement (2) is rigid in the directions in which relative movements are to be prevented.

9. The arrangement according to any one of claims 1-8, in which said link arrangement (2) is adapted to transmitting movements from said engine (4) to said auxiliary system (10).

10. A vehicle provided with an arrangement according to any one of the foregoing claims.

11. A vehicle according to claim 10, in which the auxiliary system (10) is a compressor.

## Patentansprüche

1. Anordnung, die eine Verbindungsanordnung (2), einen Verbrennungsmotor (4) mit einer mit einer ersten Riemenscheibe (8) versehenen ersten Welle (6) und ein Zusatzsystem (10) mit einer mit einer zweiten Riemenscheibe (14) versehenen zweiten Welle (6) aufweist, wobei in dieser Anordnung ein Antriebsriemen (16) an der ersten und zweiten Riemenscheibe (8, 14) angebracht und so ausgeführt ist, dass er die Rotationsbewegung von der ersten Welle (6) auf die zweite Welle (12) überträgt, und relative Bewegungen zwischen der ersten und zweiten Welle (6, 12) sechs Freiheitsgrade aufweisen, die als eine Richtung X (X-Achse) definiert sind, die die durch die Längsrichtung der ersten Welle (6) definiert ist, eine Richtung Y (Y-Achse), die durch eine die erste und zweite Welle im rechten Winkel querende und relativ zur Richtung X verlaufende Linie definiert ist, eine Richtung Z (Z-Achse), die senkrecht relativ zu den Richtungen X und Y verläuft, und Rotationen um die jeweilige X-, Y- und Z-Achse,
**dadurch gekennzeichnet, dass**
die Verbindungsanordnung (2) eine erste Stange (3, 20) aufweist, die mit einem ersten Befestigungspunkt (24) mit dem Verbrennungsmotor (4) und einem zweiten Befestigungspunkt (26) mit dem Zusatzsystem (10) ausgeführt und in einer Richtung entsprechend der Richtung Y ausgerichtet ist, und eine zweite Stange (9, 22), die mit einem ersten Befestigungspunkt (24) mit dem Verbrennungsmotor (4) und einem zweiten Befestigungspunkt (26) mit dem Zusatzsystem ausgeführt und in einer schrägen Richtung ausgerichtet ist, die weder der Richtung X noch Y entspricht, wobei die Verbindungsanordnung (2) ferner dazu eingerichtet ist, relative Bewegungen zwischen der ersten und zweiten Welle (6, 12) in mindestens zwei Freiheitsgraden, u. A. in Richtung X und Richtung Y, zu verhindern, wobei die zweite Stange (9, 22) in der durch die Richtungen X und Y definierten Ebene schräg ausgerichtet ist.

2. Anordnung nach Anspruch 1, bei der die Verbindungsanordnung (2) dazu eingerichtet ist, Kräfte in einer schrägen Richtung in der durch die Richtungen X und Y definierten Ebene zu absorbieren, wobei die schräge Richtung weder der Richtung X noch der Richtung Y entspricht.

3. Anordnung nach Anspruch 1 oder 2, bei der die Verbindungsanordnung (2) dazu eingerichtet ist, relative Bewegungen zwischen der ersten und zweiten Welle (6, 12) in mindestens vier Freiheitsgraden, u. A. Rotationen um die jeweilige Y- und Z-Achse, zu verhindern.

4. Anordnung nach Anspruch 2 oder 3, bei der die Verbindungsanordnung mindestens drei langgestreckte Stabelemente (18, 20) aufweist, die jeweils mit zwei Befestigungsabschnitten (24, 26) ausgeführt sind, die zur Befestigung am Verbrennungsmotor (4) bzw. am Zusatzsystem (10) geeignet sind.

5. Anordnung nach Anspruch 4, bei der zwei der Stabelemente (18, 20, 22) entsprechend der Richtung Y ausgerichtet sind, das dritte Stabelement (22) eine schräge Ausrichtung hat, die weder der Richtung X noch Y entspricht, und sich sämtliche Stabelemente (18, 20, 22) im Wesentlichen in der durch die Richtungen X und Y definierten Ebene befinden.

6. Anordnung nach Anspruch 2 oder 3, wobei die Verbindungsanordnung (2) eine Gitterkonstruktion (28) mit mindestens zwei Befestigungsabschnitten (30, 32) an zwei ihrer Seiten aufweist, die zur Befestigung am Verbrennungsmotor (4) bzw. am Zusatzsystem (10) geeignet sind.

7. Anordnung nach einem der Ansprüche 4 und 5, wobei jeder der Befestigungsabschnitte (18, 20, 22, 30, 32) mit einem Kugelgelenk versehen ist, über das sie am Verbrennungsmotor (4) bzw. am Zusatzsystem (10) befestigt sind.

8. Anordnung nach einem der Ansprüche 1 bis 7, wobei die Verbindungsanordnung (2) in den Richtungen steif ist, in denen relative Bewegungen zu verhindern sind.

9. Anordnung nach einem der Ansprüche 1 bis 8, wobei die Verbindungsanordnung (2) dazu eingerichtet ist, Bewegungen vom Verbrennungsmotor (4) zum Zusatzsystem (10) zu übertragen.

10. Fahrzeug mit einer Anordnung nach einem der vorigen Ansprüche.

11. Fahrzeug nach Anspruch 10, bei dem das Zusatzsystem (10) ein Verdichter ist.

## Revendications

1. Agencement, comprenant un agencement de liaison (2), un moteur (4) avec un premier arbre (6) doté d'une première poulie (8), et d'un système auxiliaire (10) avec un second arbre (12) doté d'une deuxième poulie (14), dans lequel agencement une courroie entraînement (16) est ajustée sur lesdites première et deuxième poulies (8, 14) et adaptée pour transmettre le mouvement rotatif du premier arbre (6) au deuxième arbre (12), et des mouvements relatifs entre lesdits premier et deuxième arbres (6, 12) affichent six degrés de liberté qui sont définis en termes d'une direction X (axe X) définie par la direction longitudinale du premier arbre (6), une direction Y (axe Y) définie par une ligne qui traverse lesdits premier et deuxième arbres à angles droits et est perpendiculaire par rapport à la direction X,
une direction Z (axe Z) qui est perpendiculaire auxdites directions X et Y, et aux rotations sur les axes X, Y et Z respectifs,
**caractérisé en ce que**
l'agencement de liaison (2) comprend une première tige (3, 20) dotée d'un premier point de fixation (24) vers le moteur (4) et d'un deuxième point de fixation (26) vers le système auxiliaire (10) et alignée dans une direction correspondant à ladite direction Y, et une seconde tige (9, 22) dotée d'un premier point de fixation (24) vers le moteur (4) et d'un deuxième point de fixation (26) vers le système auxiliaire et alignée dans une direction oblique qui ne correspond à aucune desdites directions X et Y, lequel agencement de liaison (2) est en outre adapté pour éviter des mouvements relatifs entre lesdits premier et deuxième arbres (6, 12) dans au moins deux degrés de liberté, notamment dans la direction X et la direction Y, la seconde tige (9, 22) étant alignée de façon oblique dans le plan défini par les directions X et Y.

2. Agencement selon la revendication 1, dans lequel l'agencement de liaison (2) est adapté pour absorber les forces dans une direction oblique dans le plan défini par les directions X et Y, laquelle direction oblique ne correspond à aucune des directions X et Y.

3. Agencement selon la revendication 1 ou 2, dans lequel l'agencement de liaison (2) est adapté pour éviter des mouvements relatifs entre lesdits premier et deuxième arbres (6, 12) dans au moins quatre degrés de liberté, notamment des rotations sur les axes Y et Z respectifs.

4. Agencement selon la revendication 2 ou 3, dans lequel l'agencement de liaison comprend au moins trois éléments de barre allongée (18, 20, 22) qui sont chacun dotés de deux parties de fixation (24, 26) appropriées pour être fixées respectivement au moteur (4) et au système auxiliaire (10).

5. Agencement selon la revendication 4, dans lequel deux desdits éléments de barre (18, 20) présentent un alignement correspondant à ladite direction Y, le troisième élément de barre (22) présente un alignement oblique qui ne correspond à aucune des directions X et Y, et la totalité des éléments de barre (18, 20, 22) est située essentiellement dans le plan défini par les directions X et Y.

6. Agencement selon la revendication 2 ou 3, lequel agencement de liaison (2) comprend un treillis (28) qui présente sur deux de ses côtés au moins deux parties de fixation (30, 32) appropriées pour être fixées respectivement au moteur (4) et au système auxiliaire (10).

7. Agencement selon l'une ou l'autre de la revendication 4 et 5, dans lequel chacune des parties de fixation (18, 20, 22, 30, 32) est dotée d'un joint sphérique par le biais duquel elles sont adaptées pour être fixées respectivement au moteur (4) et au système auxiliaire (10).

8. Agencement selon l'une quelconque des revendications 1 à 7, dans lequel l'agencement de liaison (2) est rigide dans les directions dans lesquelles des mouvements relatifs doivent être évités.

9. Agencement selon l'une quelconque des revendications 1 à 8, dans lequel ledit agencement de liaison (2) est adapté pour transmettre des mouvements dudit moteur (4) vers ledit système auxiliaire (10).

10. Véhicule doté d'un agencement selon l'une quelconque des revendications précédentes.

11. Véhicule selon la revendication 10, dans lequel le système auxiliaire (10) est un compresseur.
